# EUROPÄISCHE PATENTSCHRIFT

(11) **EP 1 347 868 B1**
(45) Veröffentlichungstag und Bekanntmachung des Hinweises auf die Patenterteilung: **05.09.2007**
(21) Anmeldenummer: 01988029.3
(22) Anmeldetag: 14.12.2001
(51) Int. Cl.: B29B 13/00, B01D 3/00, B01J 19/32

(54) **VORRICHTUNG ZUR DURCHFÜHRUNG VON STOFFAUSTAUSCHPROZESSEN**
DEVICE FOR CARRYING OUT MATERIAL EXCHANGE PROCESSES
DISPOSITIF DE MISE EN OEUVRE DE PROCESSUS DE TRANSFERT DE MATIERE

(30) Priorität: 27.12.2000 DE 10065440; 10.09.2001 DE 10144233
(43) Veröffentlichungstag der Anmeldung: 01.10.2003
(73) Patentinhaber: Bayer Technology Services GmbH, 51368 Leverkusen (DE)
(72) Erfinder: KOHLGRÜBER, Klemens, 51515 Kürten (DE); WEYRICH, Frank, 42781 Haan (DE)
(86) Internationale Anmeldenummer: PCT/EP2001/014818
(87) Internationale Veröffentlichungsnummer: WO 2002/051606

(56) Entgegenhaltungen:
- EP-A- 1 050 352
- CA-A- 2 168 630
- DE-A- 2 206 230
- DE-A- 2 243 024
- US-A- 2 490 080

## Beschreibung

Die Erfindung betrifft einen verfahrenstechnischen Apparat zur Durchführung von Stoffaustauschprozessen bei hochviskosen Flüssigkeiten, insbesondere zum Eindampfen und Entgasen von Polymerschmelzen. Der Apparat beruht im Wesentlichen auf einem vertikal stehenden Behälter, in dem die zu behandelnde hochviskose Flüssigkeit in eine Vielzahl von Einzelströmen aufgeteilt wird, die unter der Wirkung der Schwerkraft in den Sumpf des Behälters abfließen.

Wichtige Stoffaustauschprozesse bei Flüssigkeiten sind das Eindampfen und Entgasen von Lösungen, Dispersionen oder Schmelzen. Insbesondere bei der Herstellung von polymeren Kunststoffen tritt das Problem auf, niedermolekulare Stoffe z.B. Wasser oder Monomere aus der Kunstoffschmelze abzutrennen, da solche Stoffe einen nachteiligen Einfluss auf die Produktqualität haben oder z.T. sogar toxisch sind.

Zur Eindampfung von Polymerschmelzen werden nach dem Stand der Technik häufig Dünnschichtverdampfer eingesetzt, wie sie in den Schriften DE 3 310 676 A1, DE 4 328 013 A1 und US 3 630 689 beschrieben sind. Die Nachteile solcher Maschinen liegen in den relativ hohen Investitionskosten und vor allem im Verschleiß von rotierenden Teilen solcher Maschinen.

Bekannt sind ferner Strangverdampfer, bei denen die Polymerschmelze in einem vertikal stehenden Behälter mittels einer Düsenlochplatte in eine Vielzahl von Einzelsträngen bzw. -faden zerteilt wird, die im freien Fall getrennt und parallel zueinander den Behälter von oben nach unten durchströmen und am Behälterboden wieder zusammengeführt werden. Die Polymerschmelze wird also am Kopf des Behälters in Stränge separiert, die sich im freien Fall unter dem Schwerkrafteinfluss verjüngen und am Boden des Behälters in den Schmelzesumpf eintauchen. Derartige Apparate sind in den Patentschriften US 2 719 776, US 5 024 728 und US 4 934 433 beschrieben. Ein grundsätzlicher Nachteil der beschriebenen Apparate besteht darin, dass sich diese nur für Flüssigkeiten eignen, die nach dem Austritt aus der Düsenplatte ähnlich wie bei einem Spinnprozess selbständig lange Fäden bilden. Ein weiterer Nachteil liegt darin, dass eine längere Verweilzeit im Entgasungsraum nur mit Hilfe einer sehr langen Fallstrecke und dementsprechend großer Apparatebauhöhe realisiert werden kann.

In DE 22 43 024 A1 wird eine Vorrichtung zum Stoffaustausch bei verfahrenstechnischen Prozessen beschrieben, bei der die Stoffaustauschelemente aus vertikal angeordneten Blechen mit Aussparungen bestehen. Gemäß einer Variante können die Stoffaustauschflächen auch aus einem Drahtgeflecht aus jeweils mehreren miteinander verbundenen Drähten oder aus Streckmetall bestehen. Der Nachteil besteht darin, dass die von der Polykondensationsschmelze überflossenen Metallflächen groß sind, so dass der Stoffaustausch nur beschränkt stattfinden kann. Über die Entgasung fertiger Polymerlösungen wird in der Schrift nichts beschrieben.

Weiterhin wird in der Schrift CA 2 168 630 ein Verfahren zur Herstellung von Polycarbonat beschrieben, bei dem ein Gemisch von Monomeren und Präpolymer auf eine Vielzahl von vertikal in einem Reaktor angeordneten Einzeldrähten verteilt wird, an denen entlang das Flüssigkeitsgemisch nach unten abläuft und dabei auspolymerisiert. Die Polymerisation findet also in einem dünnen, den Draht einhüllenden Flüssigkeitsstrang statt; d.h. durch die vertikal aufgespannten Drähte wird im Reaktor eine definierte Polymerisationszone vorgegeben. Über die Entgasung fertiger Polymerlösungen wird in der Schrift nichts beschrieben.

Der Erfindung liegt die Aufgabe zugrunde, einen verfahrenstechnischen Apparat für Stoffaustauschprozesse zu entwickeln, der eine lange Produktverweilzeit im Gasraum unter Einhaltung eines möglichst engen Verweilzeitspektrums gewährleistet und auch für hochviskose Flüssigkeiten geeignet ist, bei denen die Ausbildung von zusammenhängenden Strängen bzw. Fäden durch Schaum- oder Blasenbildung gestört oder verhindert wird.

Diese Aufgabe wird, ausgehend von der eingangs beschriebenen Vorrichtung mit einem vertikal stehenden Behälter, erfindungsgemäß dadurch gelöst, dass an der Flüssigkeitszuführung in dem Behälter im wesentlichen parallel zur Vertikalebene nebeneinander Drahtschlaufen angeordnet sind, an deren oberen Ende jeweils mindestens eine Flüssigkeitszuführung zur Einspeisung eines Teilstromes vorgesehen ist, der längs der Drahtschlaufe nach unten abfließt. "Parallel zur Vertikalebene" bedeutet in diesem Fall, dass die Drahtschlaufenebene mit der Vertikalebene zusammenfällt, wobei jedoch geringe Abweichungen ohne weiteres toleriert werden können. Der über die Drahtschlaufe abfließende Teilstrom bildet im Falle einer hochviskosen, nicht schäumenden Flüssigkeit eine Flüssigkeitslamelle und im Falle einer schäumenden Flüssigkeit eine dünne Schicht, die sich partiell oder ganz über die Drahtschlaufenebene erstreckt. In beiden Fällen wird die Flüssigkeit von der Drahtschlaufe begrenzt und geführt. Am oberen Ende der Drahtschlaufe wird die Flüssigkeit kontinuierlich zugeführt. Am unteren Ende tropft sie wieder ab. Die Drahtschlaufe bewirkt, dass die dünne Flüssigkeitschicht oder Lamelle im strömenden Zustand stabilisiert und aufrecht erhalten wird, wobei große Phasengrenzflächen für den Stoffaustausch bereit gestellt werden.

Gegenstand der Erfindung ist eine Vorrichtung zur Durchführung von Stoffaustauschprozessen bei hochviskosen Flüssigkeiten, insbesondere zum Eindampfen und/oder Entgasen von Polymerschmelzen gemäß dem Patentanspruch 1.

Die Drahtschlaufen können eine unterschiedliche Geometrie haben z.B. Quadrate, Rechtecke oder Dreiecke als Form bilden. Die Drahtschlaufen sind bevorzugt aus einem 0,5 bis 6 mm starken Stahldraht gebogen und haben je nach Anwendungsgebiet bevorzugt eine Länge (Höhe) von 0,5 bis 4 m.

In einer bevorzugten Vorrichtung ist das Verteilerorgan eine Lochplatte.

Vorzugsweise weist das Verteilerorgan gemäß einer Variante mindestens ein horizontal angeordnetes Rohr auf, das nach unten und/oder nach oben (d.h. entgegen der Fließrichtung der Flüssigkeit) gerichtete Öffnungen für den Austritt der hochviskosen Flüssigkeit hat.

Vorzugsweise sind die Drahtschlaufen zur verbesserten Reinigung im Bereich der Öffnungen im Verteilerorgan lösbar angebracht.

Besonders vorteilhaft ist eine Vorrichtung, bei der das Verteilerorgan aus mindestens einem horizontal angeordneten Rohr besteht, das schlitzförmige, nach oben gerichtete Öffnungen aufweist.

Die Verteilerrohre haben besonders bevorzugt einen Innendurchmesser von 10 - 100 mm. Die Schlitzweite der Öffnungen beträgt besonders bevorzugt 0,2 - 10 mm und die Schlitzlänge besonders bevorzugt 10 -100 mm.

Einfacher Reinigen lässt sich auch eine weitere bevorzugte Variante der Vorrichtung, bei der das Verteilerorgan aus mindestens einem horizontal angeordneten Rohr besteht, das schlitzförmige, nach oben gerichtete Öffnungen aufweist, in die die Drahtschlaufen eingehängt sind.

Zur weiteren Erhöhung der Stabilität können in einer besonders bevorzugten Ausführung der Vorrichtung die Drahtschlaufen zusätzlich am Behälterboden befestigt sein.

Die Drahtschlaufen können in einer bevorzugten Ausführung, insbesondere mittels elektrischer Widerstandsheizung, beheizbar sein.

Eine weitere bevorzugte Variante der Vorrichtung ist dadurch gekennzeichnet, dass die Verteilerorgane aus im Behälter vertikal angeordneten, in den Behälter einmündenden Wärmetauscherrohren mit Öffnungen gebildet werden, an deren unteren Ende die Drahtschlaufen befestigt sind.

Die von einer Drahtschlaufe eingeschlossene Fläche beträgt vorzugsweise 0,5 cm² bis 2500 cm².

Eine andere bevorzugte Ausgestaltung der Vorrichtung ist dadurch gekennzeichnet, dass die Drahtschlaufen sich in Fließrichtung der Flüssigkeit verjüngen und insbesondere an ihrem unteren Ende mit einem spitzen Winkel abschließen.

Zum Zweck des verbesserten Wärmeaustausches ist in einer besonderen Ausbildung der Vorrichtung der Behälter beheizbar und/oder kühlbar ausgebildet. Insbesondere weist der Behälter eine Ummantelung für eine elektrische Heizung oder für die Durchleitung eines Wärmeträgermediums auf.

Eine weitere Alternative der Erfindung besteht darin, dass die Drahtschlaufen nicht an einem Verteilerrohr bzw. einer Verteilerplatte oder an den Wärmetauscherrohren wie oben beschrieben befestigt werden, sondern mittels einer entsprechenden Halterung am Behälterboden angebracht sind aber zu den Öffnungen der Verteilerrohre bzw. Verteilerplatte oder der vertikalen Wärmetauscherrohre führen.

Mit der Erfindung werden die nachfolgend dargestellten Vorteile gegenüber aus dem Stand der Technik bekannten Vorrichtungen erzielt:

Im Vergleich zu einem Strangverdampfer können im Gasraum erheblich größere Produktverweilzeiten erreicht werden.

Durch die Wahl der Geometrie der Drahtschlaufen (insbesondere Länge und Fläche!) kann die Verweilzeit darüber hinaus in weiten Grenzen variiert und an prozessspezifische Erfordernisse angepasst werden.

In der Schrift CA 2 168 630 werden vertikal angeordnete Drähte zur Verlängerung der Produktverweilzeit in einem Reaktor beschrieben. Ein Draht ist dabei einer oder mehreren Produktaustrittsöffnungen zugeordnet. Durch die treibende Schwerkraft läuft das Produkt an den vertikalen Drähten herunter. Durch die Produkthaftung an der Drahtoberfläche entstehen Schubspannungen, die insbesondere bei hochviskosen Produkten der Schwerkraft entgegenwirken. Dadurch kann die mittlere Produktverweilzeit gegenüber den frei fallenden Faden (wie beim Strangverdampfer) verlängert werden.

Gegenüber der Reaktor-Vorrichtung mit einfachem vertikalen Draht hat die erfindungsgemäße Vorrichtung mit Drahtschlaufe, die zwangsläufig nicht durchgehend streng vertikal ist, verschiedene Vorteile:

Die Drahtschlaufen werden oft mit einem Polymerschaum beaufschlagt, der nicht gleichmäßig in den Entgasungsbehälter eintritt, vielmehr sind die einzelnen Produktöffnungen Durchsatzschwankungen unterworfen. Ein vertikaler Draht kann diese Produktpulsationen nur unwesentlich abfangen, wodurch die Produktqualität am Austrag ebenfalls erheblich schwankt. Eine einfache Drahtschlaufe vergleichmäßigt diese Schwankungen in mehrfacher Hinsicht. Weiterhin sind die Produktverweilzeitverteilung und die mittlere Produktverweilzeit viel flexibler einstellbar. Die Vorteile sind im Einzelnen:
- Durch eine Anordnung, bei der mehr als ein vertikaler Drahtabschnitt eine Produktzufuhr erfährt, vergleichmäßigt sich der Produktablauf an den Drähten durch die Lamellenwirkung.
- Durch eine Verjüngung der Drahtschlaufen (die nach unten zeigenden Drähte sind nicht genau vertikal ausgerichtet) können verschiedene Produkteintrittsöffnungen eine Drahtschlaufe mit Produkt benetzen. Dadurch ergibt sich eine erhebliche Vergleichmäßigung bei pulsierender Zufuhr aus den Einzelöffnungen (integral ist die Produktzufuhr in der Regel durch eine vorgeschaltete Pumpe konstant).
- Durch die bevorzugten Querverbindungen der Drähte (quer zur Schwerkraft) entsteht ein zusätzlicher Strömungswiderstand für das Produkt (bekannt als Widerstandsbeiwert Cw oder Druckverlustbeiwert Cd). Insbesondere durch ein quer zur Strömungsrichtung aufgespanntes Gitter mit einer bestimmten Packungsdichte ergeben sich Vorteile hinsichtlich einstellbarer Produktverweilzeit bezogen auf die Drahtoberfläche und der beschriebenen Vergleichmäßigung.

Drahtgitter quer zum Produktzufluss können auch in mehreren Lagen übereinander liegend mehrfach eingesetzt werden, wodurch sich eine hohe Flexibilität zur Auslegung des gewünschten Strömungswiderstandes ergibt. Bei hochviskosen Produkten kann das Gitter meist grobmaschig sein. Das Gitter wirkt jedoch auch bei niederviskosen Flüssigkeiten, wenn die Packungsdichte der Drähte eng ist: Ein gebündelter Strahl, der zeitlich intermitierend senkrecht auf eine Siebfläche trifft, wird räumlich ausgedehnt und die Siebfläche mit näherungsweise konstanten Durchsatz verlassen.

Durch die Vernetzung der Drahtschlaufen untereinander (Gitter) ergibt sich gegenüber der bekannten Vorrichtung mit einfachen hängenden Drähten außerdem eine wesentlich höhere mechanische Stabilität.

Besonders bevorzugt ist daher eine Vorrichtung die dadurch gekennzeichnet ist, dass unterhalb der Öffnungen zusätzlich ein oder mehrere übereinander im wesentlichen horizontal angeordnete Drahtgitter vorgesehen sind.

Weiter bevorzugt ist auch eine Variante der Vorrichtung, bei der die oberen Enden der Drahtschlaufen an unterschiedlichen insbesondere an entfernten, nicht direkt nebeneinander angeordneten Öffnungen angebracht sind.

Aufgrund der definierten Schichtströmung von hochviskosen Medien in den Drahtschlaufen wird ein enges Verweilzeitspektrum erreicht. Dies bedeutet, dass alle Flüssigkeitsvolumenelemente in dem Apparat annähernd denselben thermodynamischen Prozess durchlaufen. Dies hat eine höhere Gleichmäßigkeit bei der Produktqualität, insbesondere von thermisch empfindlichen Produkten zur Folge.

Für den Stoffaustausch wird im Gasraum gegenüber den bekannten Vorrichtungen eine große Phasengrenzfläche bereitgestellt.

Der erfindungsgemäße Apparat ist für die Entgasung sowohl von schäumenden und von nicht schäumenden Polymeren geeignet. Bei der Entgasung von schäumenden Polymeren können hinsichtlich der Entgasungseffektivität die Vorteile einer Dünnschichtentgasung mit den Vorteilen einer Schaumentgasung kombiniert werden.

Die Gesamtoberfläche der aus Metall bestehenden Drahtschlaufen ist vergleichsweise gering, so dass die Gefahr einer Produktschädigung durch unerwünschte chemische Reaktionen an den Metalloberflächen (z.B. Crack-prozesse) stark reduziert ist.

Der apparative Aufwand zur Realisierung der erfindungsgemäßen Vorrichtungen ist vergleichsweise gegenüber den bekannten Vorrichtungen geringer.

Hauptanwendungsgebiete der Erfindung sind, wie schon beschrieben, die Eindampfung und das Entgasen von hochviskosen Polymerschmelzen insbesondere in einem Viskositätsbereich von 0,01 - 40000 Pa.s, aber auch gezielte chemische Reaktionen zwischen der Flüssigkeitsschicht in der Drahtschlaufe und dem umgebenden Gasraum, der eine reaktive Gaskomponente enthält, sowie Kondensationsreaktionen.

Weiterer Gegenstand der Erfindung ist daher die Verwendung der erfindungsgemäßen Vorrichtung zum Eindampfen und Entgasen von hochviskosen Flüssigkeiten, insbesondere zum Eindampfen und/oder Entgasen von Polymerlösungen oder - schmelzen gemäß dem Verwendungsanspruch 15, besonders bevorzugt von Polycarbonatlösungen oder-schmelzen, und die Verwendung zur Durchführung chemischer Reaktionen zwischen der Flüssigkeitsschicht in der Drahtschlaufe und dem umgebenden Gasraum, der eine reaktive Gaskomponente enthält, sowie für Kondensationsreaktionen, gemäß dem Verwendungsanspruch 16.

Die Erfindung wird nachfolgend anhand der Figuren durch die Beispiele weiter erläutert.

Es zeigen:
- Figur 1: die prinzipielle Ausführung eines Stoffaustauschapparates mit eingebauten Drahtschlaufen
- Figur 2: ein Verteilerrohr mit Flüssigkeitsöffnungen und den Öffnungen zugeordneten Drahtschlaufen
- Figur 3a, b: die Anordnung von Drahtschlaufen an einer Düsenplatte in Längsschnitt (Figur 3a) und Querschnitt (Figur 3b)
- Figur 4a, b: eine Anordnung von Drahtschlaufen in Längsschnitt (Figur 4a) und Querschnitt (Figur 4b) an vertikal stehenden Wärmeaustauscherrohren, wobei jedem Wärmetauscherrohr eine Drahtschlaufe zugeordnet ist
- Figur 5a, b: eine Anordnung von Drahtschlaufen in Längsschnitt (Figur 5a) und Querschnitt (Figur 5b) an vertikal stehenden Wärmeaustauscherrohren, wobei jeweils zwei benachbarten Wärmetauscherrohren eine Drahtschlaufe zugeordnet ist
- Figur 6: eine Anordnung von zwei zusätzlich angebrachten horizontalen Gittern
- Figur 7: eine Anordnung von Drahtschlaufen an vertikal stehenden Wärmetauscherrohren, wobei die Enden der Drahtschlaufen entfernte Öffnungen miteinander verbinden
- Figur 8a: die Anordnung gemäß Figur 7 schematisch von unten gesehen
- Figur 8b: einen vergrößerten Ausschnitt der Figur 8a.

### Beispiele:

### Beispiel 1

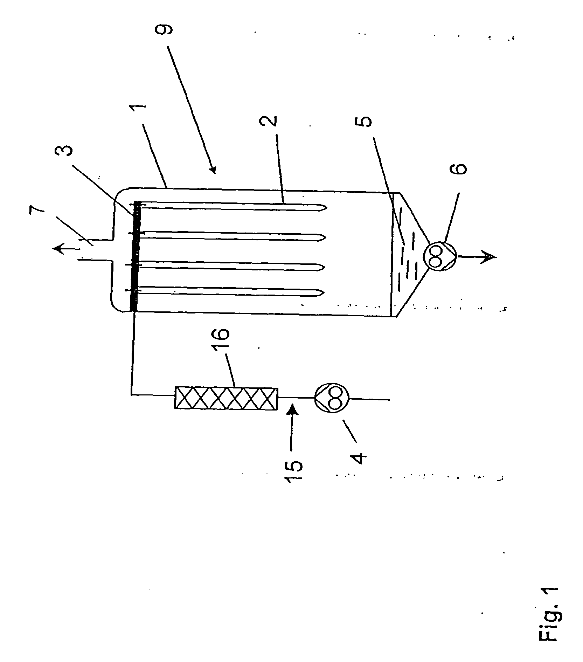

Gemäß Figur 1 sind in einem vertikal stehenden Entgasungsbehälter 1 vier sich ebenfalls in vertikaler Richtung erstreckende Drahtschlaufen 2 angeordnet. Die Drahtschlaufen 2 sind an einem horizontal verlaufenden Verteilerorgan 3, das hier als Rohr ausgeführt ist, befestigt. Das Verteilerrohr 3 ist mit einer Produktzuführung 4 verbunden. Das entgaste Produkt wird am Sumpf 5 des Behälters 1 mit Hilfe einer Zahnradpumpe 6 ausgetragen. Die bei der Entgasung entstehenden Brüden werden durch den Stutzen 7 abgezogen. Über den Stutzen 7 kann in dem Behälter 1 ein vorgegebener verminderter Druck eingestellt werden. Der Behälter 1 kann mit elektrischer Heizung (nicht gezeigt) beheizt werden.

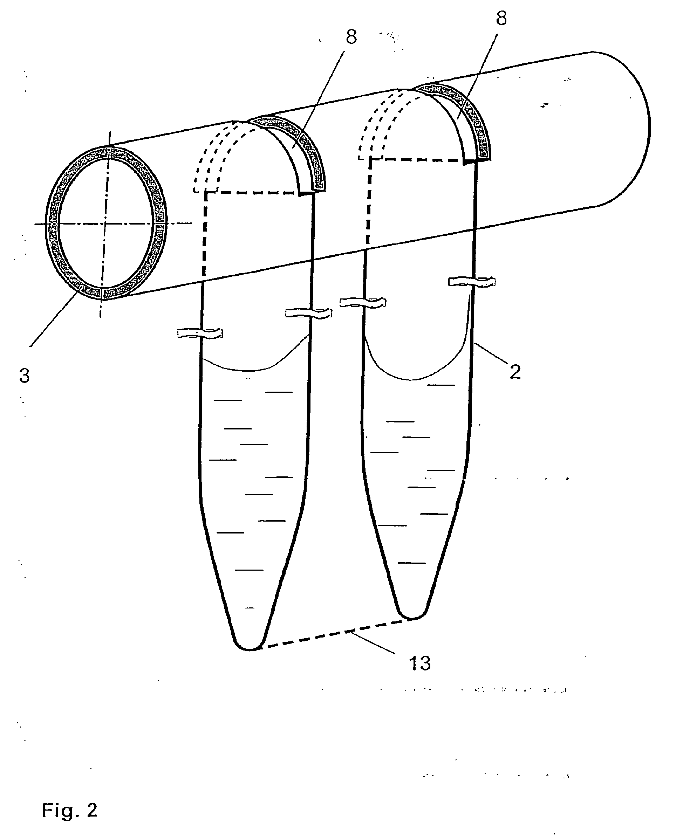

Aus Figur 2 ist ersichtlich, wie die Drahtschlaufen 2 am Verteilerrohr 3 befestigt sind. Sie sind derart in schlitzförmige, an der oberen Hälfte des Verteilerrohrs 3 angebrachte Öffnungen 8 eingehängt, dass sich die schlitzförmige Öffnung 8 in Längsrichtung über die gesamte Breite der Drahtschlaufe erstreckt, so dass die Drahtschlaufe über ihre volle Breite mit einer zu entgasenden Produktflüssigkeit beaufschlagt wird. Die Schlitze 8 sind halbkreisförmig nach oben ausgerichtet, so dass die Produktflüssigkeit um die Rohre 3 herumfließen kann und die Rohrflächen von dem Produkt umspült werden. Ein Vorteil dieser Anordnung besteht darin, dass die Verweilzeit der Produktflüssigkeit erhöht wird. Eine weitere Erhöhung der Verweilzeit der Produktflüssigkeit kann durch eine Vergrößerung des Rohrdurchmessers erreicht werden. Gleichzeitig wird dadurch der Druckgradient im Rohr verringert und damit der Durchsatz in den schlitzförmigen Öffnungen 8 gleichmäßiger. Die Rohre 3 haben einen Innendurchmesser von 16 mm. Die Schlitzweite beträgt z.B. 3 mm und die Schlitzlänge ca. 27 mm. Die Drahtschlaufen 2 laufen an ihren unteren Enden über dem Sumpf spitz zu. In einer Variante sind die spitzen Enden benachbarter Drahtschlaufen 2 durch einen angeschweissten Draht 13 miteinander verbunden

### Beispiel 2

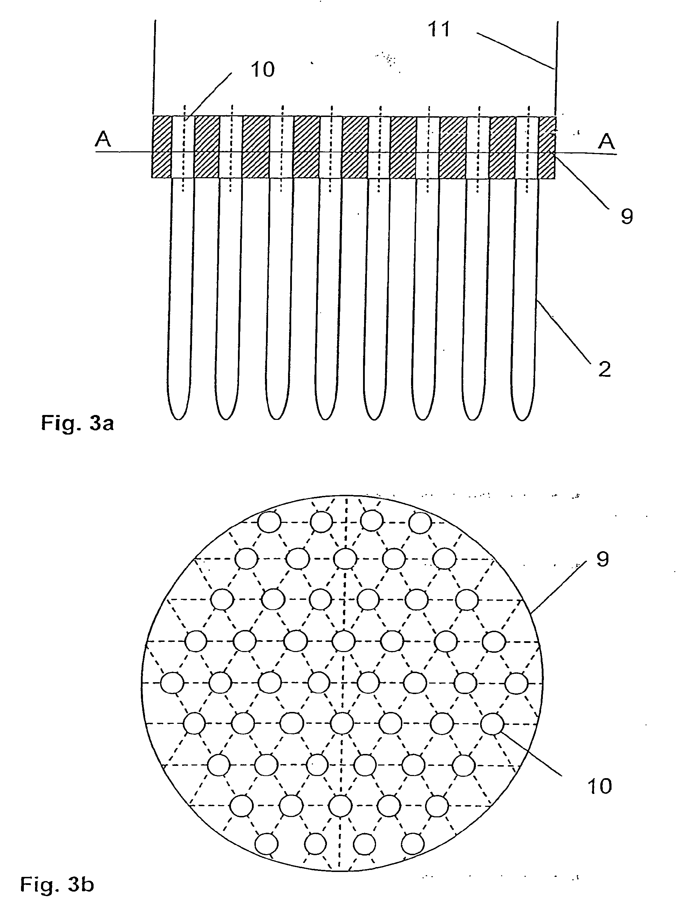

In einer anderen Verdampferanordnung gemäß Figur 3 (Seitenansicht und Draufsicht) besteht das Verteilerorgan für die Zuführung der Produktflüssigkeit aus einer Düsenplatte 9 mit Öffnungen 10. Die Drahtschlaufen 2 sind an der Unterseite der Düsenplatte 9 befestigt, z.B. angeschweißt oder angelötet. Die Produktflüssigkeit wird über eine, den gesamten Querschnitt der Düsenplatte 9 abdeckende Zuleitung 11 zugeführt. Die Zuleitung 11 kann auch als Wärmetauscherrohr ausgeführt werden.

### Beispiel 3

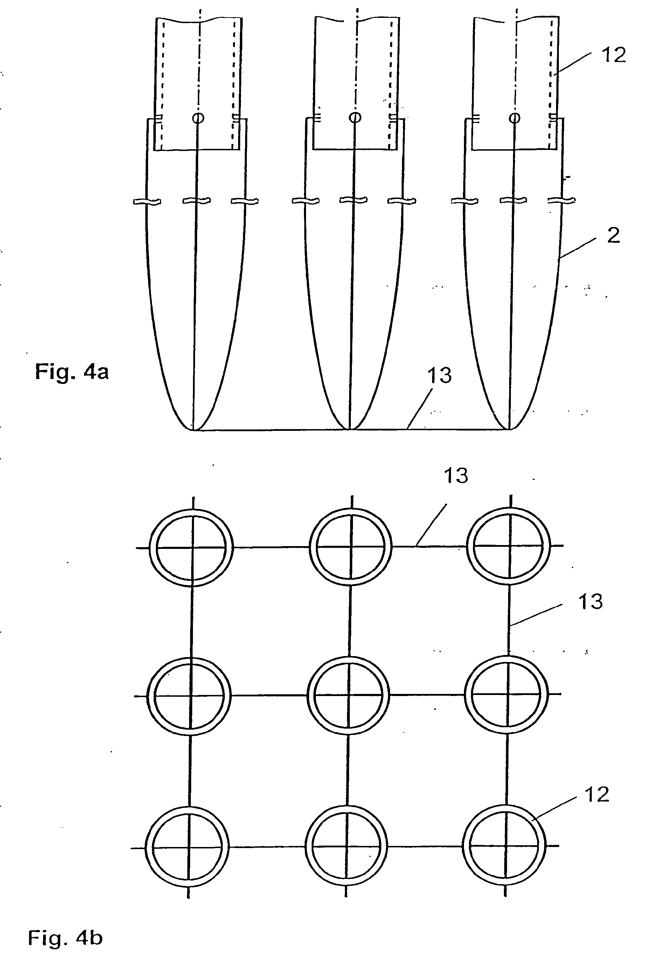

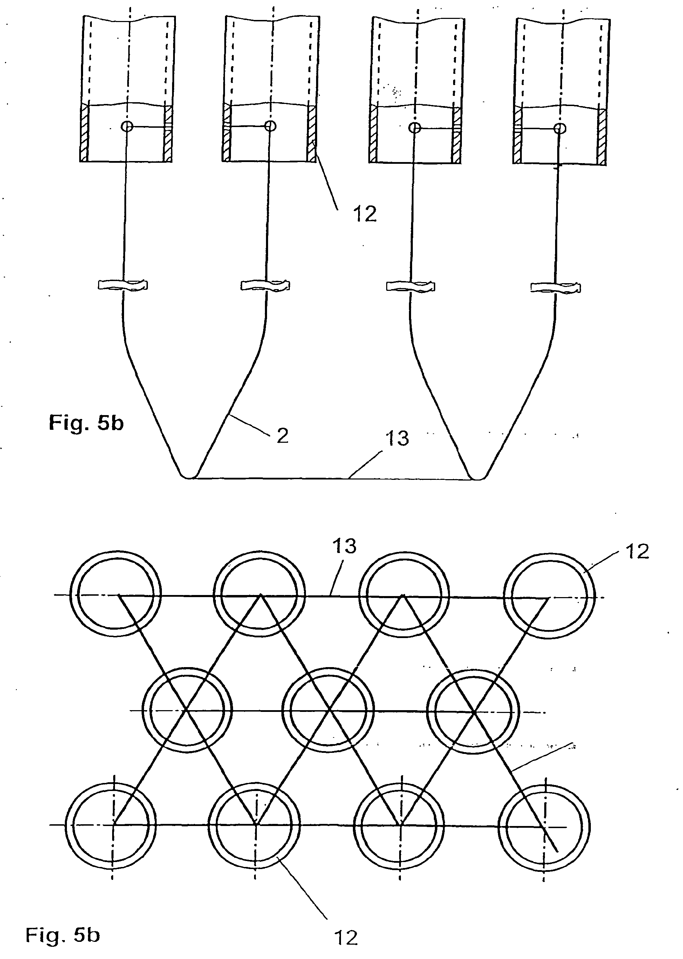

Das Verteilerorgan wie in den Beispielen 1 und 2 kann auch auf folgende Weise ausgebildet sein. Gemäß der Darstellung in Figur 4 und 5 wird die Produktflüssigkeit einer Drahtschlaufe 2 durch vertikal im Behälter 1 angeordnete Wärmetauscherrohre 12 zugeführt. Die Drahtschlaufen 2 sind bei der Ausführung nach Figur 4 jeweils am Austritt der Wärmetauscherrohre 12 angebracht; d.h. die Wärmetauscherrohre dienen in diesem Fall direkt als Halterung für die Drahtschlaufen 2. An ihrem unteren Ende sind die Drahtschlaufen 2 aus Stabilitätsgründen gitterförmig durch Querstege 13 verbunden (s.a. Draufsicht). Bei der Variante der Ausführung nach Figur 5 sind die Drahtschlaufen 2 dagegen jeweils an zwei benachbarten Wärmetauscherrohren 12 angebracht, so dass die Flüssigkeit jeweils über zwei Flüssigkeitszuführungen in eine Drahtschlaufe 2 eingespeist wird. Auch bei dieser Ausführung sind die spitz zulaufenden Enden der Drahtschlaufen untereinander durch Querstege 13 verbunden.

Die Drahtschlaufen 2 sind in allen oben genannten Beispielen aus einem 1,5 mm starken Stahldraht gebogen und haben eine Länge (Höhe der Schlaufe) von 1,5 m. Besonders bewährt hat sich, wie in den Figuren dargestellt, eine Dreieck-ähnliche Form, wobei sich der Scheitel des Dreiecks am unteren Ende befindet; d.h. die Drahtschlaufe verjüngt sich von oben nach unten in der Fließrichtung der Flüssigkeit.

Im Betrieb wird der Mengenstrom der dem Apparat zugeführten Produktflüssigkeit (Zudosierung) so eingestellt, dass sich in der von einer Drahtschlaufe eingeschlossenen Fläche (Drahtschlaufenebene) eine definierte Schichtströmung ausbildet. Die am oberen Ende durch die Öffnungen 8 bzw. 10 im Verteilerorgan oder durch die Einzelrohre 12 zugeführte Flüssigkeit verteilt sich gleichmäßig über die Drahtschlaufenebene. Der Draht wirkt dabei als Begrenzung und strömungstechnisches Führungselement.

Am unteren Ende der Drahtschlaufe tropft die entgaste Produktflüssigkeit in den Sumpf am Behälterboden ab. Überraschenderweise bildet sich diese Schichtströmung (Filmströmung) auch bei einer schäumenden Polymerschmelze aus, so dass die verfahrentechnischen Voraussetzungen für eine kombinierte Film- und Schaumentgasung gegeben sind, wodurch eine besonders hohe Entgasungseffektivität erzielt wird. Das Aufschäumen der Polymerschmelze im Entgasungsbehälter kann gezielt dadurch erreicht werden, dass der Gesamtdruck im Behälter unter den Dampfdruck der aus dem Polymer zu entfernenden flüchtigen Komponente abgesenkt wird. Eine weitere Möglichkeit zur Schaumbildung und zur Verbesserung der Entgasungseffektivität besteht darin, dass dem Polymer vor dem Eintritt in den Behälter Schleppmittel zugesetzt werden, die z.B. mit Hilfe eines statischen Mischers in die Schmelze eindispergiert werden.

### Beispiel 4

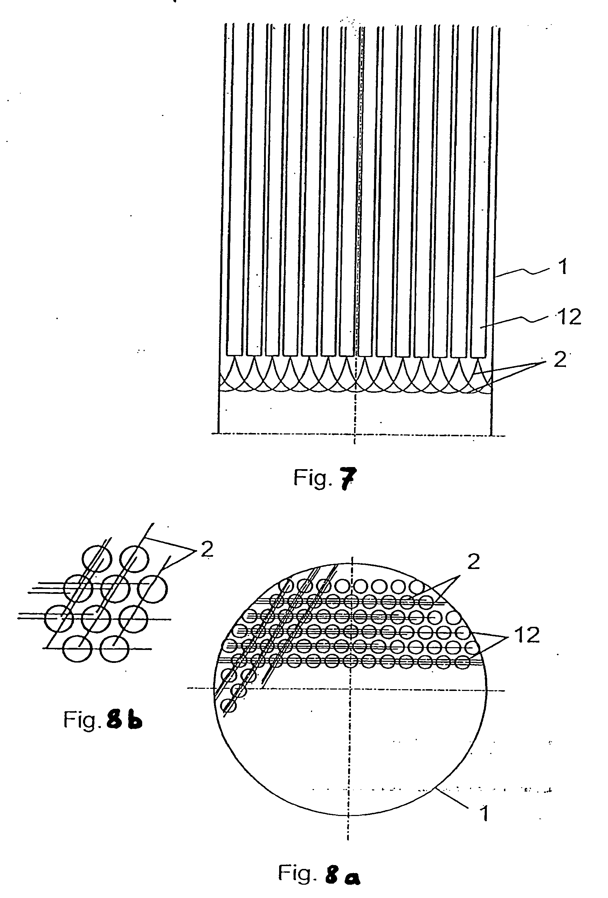

Die Figuren 7, 8a und 8b beschreiben eine andere Anordnung des Verdampfers bei dem voneinander weiter entfernte vertikale Wärmetauscherrohre 12 an ihren Öffnungen mit den Enden der Drahtschlaufen verbunden sind. Hiermit wird bei der Behandlung von Polymeren der Produktfluss innerhalb des Verdampfers weiter gedämpft und Durchflusspulsationen werden ausgeglichen.

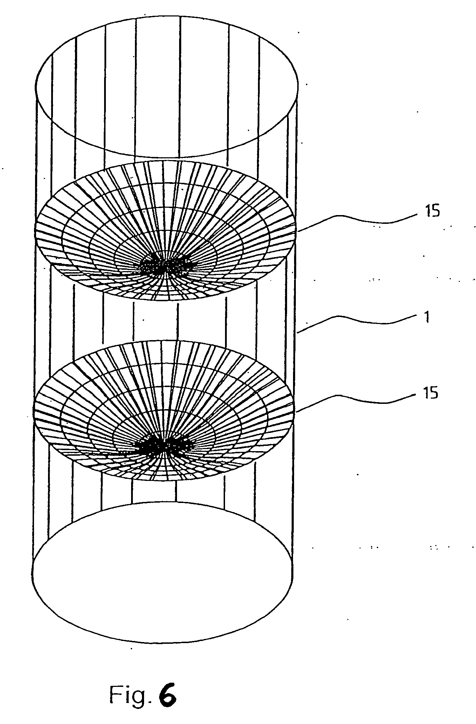

Bringt man unterhalb der Drahtschlaufen 2 noch zwei zusätzliche Gitter 15 an wie in Figur 6 dargestellt, erreicht man eine weitere Vergleichmäßigung des Produktflusses. Bei den gezeigten zur Mitte etwas durchhängenden Gitternetzen 15 wird zusätzich eine gewisse Führung des Produktstromes zu einer Stelle direkt oberhalb des Produktaustrags 6 ermöglicht.

## Patentansprüche

1. Vorrichtung zur Durchführung von Stoffaustauschprozessen bei hochviskosen Flüssigkeiten, insbesondere zum Eindampfen und/oder Entgasen von Polymeren oder Polymerschmelzen, bestehend aus einem vertikal stehenden Behälter (1) mit einer Zuführung (4) für die zu behandelnde Flüssigkeit, einem Auslass (7) für flüchtige Komponenten und einem Auslass (6) für die behandelte Flüssigkeit, wobei die Zuführung (4) mit einem Verteilerorgan (3) mit einer Vielzahl von Öffnungen (8, 10) für die Aufteilung der zu behandelnden hochviskosen Flüssigkeit in eine Vielzahl von Einzelströmen versehen ist, und die Öffnungen (8,10) mit vertikal angeordneten Stoffaustauschelementen in Verbindung stehen, **dadurch gekennzeichnet, dass** die Stoffaustauschelemente jeweils aus einer durch einen Draht gebildeten Schlaufe bestehen, in der die hochviskose Flüssigkeit in Form einer Schichtströmung unter Wirkung der Schwerkraft abfließt.

2. Vorrichtung nach Anspruch 1, **dadurch gekennzeichnet, dass** das Verteilerorgan eine Lochplatte ist.

3. Vorrichtung nach Anspruch 1 oder 2, **dadurch gekennzeichnet, dass** das Verteilerorgan (3) mindestens ein horizontal angeordnetes Rohr (3) aufweist, das nach unten und/oder nach oben gerichtete Öffnungen (8) aufweist.

4. Vorrichtung nach einem der Ansprüche 1 bis 3, **dadurch gekennzeichnet, dass** die Drahtschlaufen (2) im Bereich der Öffnungen (10) im Verteilerorgan (3,9) lösbar angebracht sind.

5. Vorrichtung nach Anspruch 3 oder 4, **dadurch gekennzeichnet, dass** das Verteilerorgan aus mindestens einem horizontal angeordneten Rohr (3) besteht, das schlitzförmige, nach oben gerichtete Öffnungen (8) aufweist.

6. Vorrichtung nach Anspruch 5, **dadurch gekennzeichnet, dass** das Verteilerorgan aus mindestens einem horizontal angeordneten Rohr (3) besteht, das schlitzförmige, nach oben gerichtete Öffnungen (8) aufweist, in die die Drahtschlaufen (2) eingehängt sind.

7. Vorrichtung nach einem der Ansprüche 1 bis 6, **dadurch gekennzeichnet, dass** die Drahtschlaufen (2) zusätzlich am Behälterboden befestigt sind.

8. Vorrichtung nach einem der Ansprüche 1 bis 7, **dadurch gekennzeichnet, dass** die Drahtschlaufen mittels elektrischer Widerstandsheizung beheizbar sind.

9. Vorrichtung nach einem der Ansprüche 1 bis 8, **dadurch gekennzeichnet, dass** die Verteilerorgane (3, 9) aus im Behälter (1) vertikal angeordneten, in den Behälter (1) einmündenden Wärmetauscherrohren (12) mit Öffnungen (8) gebildet werden, an deren unteren Ende die Drahtschlaufen (2) befestigt sind.

10. Vorrichtung nach einem der Ansprüche 1 bis 9, **dadurch gekennzeichnet, dass** die von einer Drahtschlaufe eingeschlossene Fläche 0,5 cm² bis 2500 cm² beträgt.

11. Vorrichtung nach einem der Ansprüche 1 bis 10, **dadurch gekennzeichnet, dass** die Drahtschlaufen (2) sich in Fließrichtung der Flüssigkeit verjüngen und an ihrem unteren Ende mit einem spitzen Winkel abschließen.

12. Vorrichtung nach einem der Ansprüche 1 bis 11, **dadurch gekennzeichnet, dass** der Behälter (1) beheizbar und/oder kühlbar ausgebildet ist.

13. Vorrichtung nach einem der Ansprüche 1 bis 12, **dadurch gekennzeichnet, dass** die oberen Enden der Drahtschlaufen (2) an unterschiedlichen, nicht direkt nebeneinander angeordneten Öffnungen (8, 10) angebracht sind.

14. Vorrichtung nach einem der Ansprüche 1 bis 13, **dadurch gekennzeichnet, dass** unterhalb der Öffnungen (8, 10) zusätzlich ein oder mehrere übereinander horizontal angeordnete Drahtgitter (15) vorgesehen sind.

15. Verwendung der Vorrichtung nach einem der Ansprüche 1 bis 14 zum Eindampfen und Entgasen von hochviskosen Flüssigkeiten, vorzugsweise zum Eindampfen und/oder Entgasen von Polymerlösungen oder -schmelzen.

16. Verwendung der Vorrichtung nach einem der Ansprüche 1 bis 14 zur Durchführung chemischer Reaktionen zwischen der Flüssigkeitsschicht in der Drahtschlaufe und dem umgebenden Gasraum, der eine reaktive Gaskomponente enthält, sowie für Kondensationsreaktionen.

## Claims

1. Apparatus for carrying out mass transfer processes with high-viscosity liquids, particularly for boiling down and/or devolatilizing polymers or polymer melts, comprising a vertically disposed vessel (1) having a feeder means (4) for the liquid to be treated, an outlet (7) for volatile components and an outlet (6) for the treated liquid, the feeder means (4) being equipped with a distributor element (3) having a multiplicity of orifices (8, 10) for subdividing the high-viscosity liquid to be treated into a multiplicity of individual streams, and the orifices (8, 10) communicating with vertically arranged mass transfer elements, **characterized in that** the mass transfer elements each consist of a wire loop in which the high-viscosity liquid runs off in the form of a laminar flow under the action of gravity.

2. Apparatus according to Claim 1, **characterized in that** the distributor element is a perforated plate.

3. Apparatus according to Claim 1 or 2, **characterized in that** the distributor element (3) includes at least one horizontally arranged tube (3) which has orifices (8) pointing downwards and/or upwards.

4. Apparatus according to any one of Claims 1 to 3, **characterized in that** the wire loops (2) in the vicinity of the orifices (10) in the distributor element (3, 9) are disposed detachably.

5. Apparatus according to Claim 3 or 4, **characterized in that** the distributor element comprises at least one horizontally arranged tube (3) which has slotted orifices (8) pointing upwards.

6. Apparatus according to Claim 5, **characterized in that** the distributor element comprises at least one horizontally arranged tube (3) which has slotted orifices (8) pointing upwards, into which the wire loops (2) are clipped.

7. Apparatus according to any one of Claims 1 to 6, **characterized in that** the wire loops (2) are additionally attached to the vessel bottom.

8. Apparatus according to any one of Claims 1 to 7, **characterized in that** the wire loops can be heated by means of electric resistance heating means.

9. Apparatus according to any one of Claims 1 to 8, **characterized in that** the distributor elements (3, 9) are formed by heat exchange tubes (12) which are vertically arranged in the vessel (1), debauch into the vessel (1) and have orifices (8), the wire loops (2) being attached to the bottom ends of said heat exchange tubes.

10. Apparatus according to any one of Claims 1 to 9, **characterized in that** the area enclosed by a wire loop is from 0.5 cm² to 2500 cm².

11. Apparatus according to any one of Claims 1 to 10, **characterized in that** the wire loops (2) taper in the direction of flow of the liquid and terminate in an acute angle at their bottom ends.

12. Apparatus according to any one of Claims 1 to 11, **characterized in that** the vessel (1) is designed to be heatable and/or coolable.

13. Apparatus according to any one of Claims 1 to 12, **characterized in that** the top ends of the wire loops (2) are disposed at different orifices (8, 10) not disposed directly next to one another.

14. Apparatus according to any one of Claims 1 to 13, **characterized in that** one or more wire lattices (15) arranged horizontally above one another are additionally provided below the orifices (8, 10).

15. Use of the apparatus according to any one of Claims 1 to 14 for boiling down and devolatilizing high-viscosity liquids, preferably for boiling down and/or devolatilizing polymer solutions or polymer melts.

16. Use of the apparatus according to any one of Claims 1 to 14 for carrying out chemical reactions between the liquid layer in the wire loop and the surrounding gas space which contains a reactive gas component, and for condensation reactions.

## Revendications

1. Dispositif de réalisation de processus de transfert de matière dans le cas de liquides très visqueux, destiné notamment à concentrer et/ou à dégazer des polymères ou des fontes de polymère, lequel comprend un récipient vertical (1) comportant une amenée (4) pour le liquide à traiter, un orifice de sortie (7) pour les composants volatils et un orifice de sortie (6) pour le liquide traité, l'amenée (4) étant munie d'un organe répartiteur (3) comportant une pluralité d'ouvertures (8, 10) et servant à répartir le liquide très visqueux à traiter en une pluralité de courants indépendants, et les ouvertures (8, 10) étant reliées à des éléments de transfert de matière disposés verticalement, **caractérisé en ce que** les éléments de transfert de matière sont chacun constitués d'une boucle formée par un fil métallique dans laquelle le liquide très visqueux s'écoule sous forme d'un écoulement laminaire sous l'effet de la pesanteur.

2. Dispositif selon la revendication 1, **caractérisé en ce que** l'organe répartiteur est une platine perforée.

3. Dispositif selon la revendication 1 ou 2, **caractérisé en ce que** l'organe répartiteur (3) comporte au moins un tube (3) disposé horizontalement qui présente des ouvertures (8) dirigées vers le bas et/ou vers le haut.

4. Dispositif selon l'une des revendications 1 à 3, **caractérisé en ce que** les boucles de fil métallique (2) sont montées de manière détachable dans la zone des ouvertures (10) ménagées dans l'organe répartiteur (3, 9).

5. Dispositif selon la revendication 3 ou 4, **caractérisé en ce que** l'organe répartiteur comprend au moins un tube (3) disposé horizontalement qui comporte des ouvertures (8) en forme de fente dirigées vers le haut.

6. Dispositif selon la revendication 5, **caractérisé en ce que** l'organe répartiteur comprend au moins un tube (3) disposé horizontalement qui comporte des ouvertures (8) en forme de fente dirigées vers le haut dans lesquelles sont accrochées les boucles de fil métallique (2).

7. Dispositif selon l'une des revendications 1 à 6, **caractérisé en ce que**, de plus, les boucles de fil métallique (2) sont fixées au fond du récipient.

8. Dispositif selon l'une des revendications 1 à 7, **caractérisé en ce que** les boucles de fil métallique peuvent être chauffées au moyen d'un chauffage électrique par effet Joule.

9. Dispositif selon l'une des revendications 1 à 8, **caractérisé en ce que** les organes répartiteurs (3, 9) sont constitués par des tubes d'échangeur thermique (12) dotés d'ouvertures (8) qui sont disposés verticalement dans le récipient (1) et débouchent dans le récipient (1) et à l'extrémité inférieure desquels les boucles de fil métallique (2) sont fixées.

10. Dispositif selon l'une des revendications 1 à 9, **caractérisé en ce que** la surface englobée par une boucle de fil métallique fait de 0,5 cm² à 2 500 cm².

11. Dispositif selon l'une des revendications 1 à 10, **caractérisé en ce que** les boucles de fil métallique (2) s'effilent dans le sens d'écoulement du liquide et se terminent, à leur extrémité inférieure, en faisant un angle aigu.

12. Dispositif selon l'une des revendications 1 à 11, **caractérisé en ce que** le récipient (1) peut être chauffé et/ou réfrigéré.

13. Dispositif selon l'une des revendications 1 à 12, **caractérisé en ce que** les extrémités supérieures des boucles de fil métallique (2) sont situées à différentes ouvertures (8, 10) qui ne sont pas disposées les unes juste à côté des autres.

14. Dispositif selon l'une des revendications 1 à 13, **caractérisé en ce que**, de plus, il est prévu, au-dessous des ouvertures (8, 10), un ou plusieurs treillis métalliques (15) disposés horizontalement les uns au-dessus des autres.

15. Utilisation du dispositif selon l'une des revendications 1 à 14 pour concentrer et dégazer des liquides très visqueux, de préférence pour concentrer et/ou dégazer des solutions de polymère ou des fontes de polymère.

16. Utilisation du dispositif selon l'une des revendications 1 à 14 pour provoquer des réactions chimiques entre la couche de liquide qui se trouve dans la boucle de fil métallique et la chambre environnante remplie de gaz, laquelle contient un composant gazeux réactif, ainsi que pour provoquer des réactions de condensation.
